# FASCICULE DE BREVET EUROPEEN

(11) **EP 3 600 727 B1**
(45) Date de publication et mention de la délivrance du brevet: **03.03.2021**
(21) Numéro de dépôt: 18712247.8
(22) Date de dépôt: 27.03.2018
(51) Int. Cl.: B33Y 80/00, B29C 64/393, B33Y 50/02, B22F 3/105, B22F 5/10, B29C 64/153, B33Y 10/00, G01N 1/28

(54) **ÉPROUVETTE POUR LA VALIDATION DE PARAMÈTRES OPÉRATOIRES D'UN PROCÉDÉ DE FABRICATION ADDITIVE D'UNE PIÈCE PAR FUSION LASER SUR LITS DE POUDRE**
PRÜFKÖRPER FÜR DIE VALIDIERUNG VON BETRIEBSPARAMETERN EINES ADDITIVEN HERSTELLUNGSVERFAHRENS FÜR EIN TEIL DURCH LASER-PULVERBETTSCHMELZEN
SPECIMEN FOR THE VALIDATION OF OPERATING PARAMETERS OF AN ADDITIVE MANUFACTURING PROCESS OF A PART BY LASER POWDER BED FUSION

(30) Priorité: 27.03.2017 FR 1752523
(43) Date de publication de la demande: 05.02.2020
(73) Titulaire: Safran Helicopter Engines, 64510 Bordes (FR)
(72) Inventeur: DANIS, Yann, 77550 Moissy-Cramayel (FR); MARCHAND, Alexis, 77550 Moissy-Cramayel (FR); GERMAIN, Aurèle, 77550 Moissy-Cramayel (FR)
(74) Mandataire: Gevers & Orès
(86) Numéro de dépôt international: PCT/EP2018/057751
(87) Numéro de publication internationale: WO 2018/178065

(56) Documents cités:
- FR-A1- 3 029 829
- US-A1- 2010 174 392
- US-A1- 2013 112 366
- US-A1- 2014 300 017
- US-A1- 2015 219 572

## Description

### DOMAINE TECHNIQUE

La présente invention concerne une éprouvette pour la validation de paramètres opératoires d'un procédé de fabrication additive d'une pièce par fusion laser sur lits de poudre.

### ETAT DE L'ART

L'état de la technique comprend les demandes de brevet publiées sous les numéros FR-A1-3 029 829, US-A1-2013/112366, US-A1-2010/174392, US-A1-2014/300017 et US-A1-2015/219572.

La fabrication additive, en particulier par fusion laser sur lits de poudre, est un procédé de plus en plus utilisé qui présente de nombreux avantages. Avant de réaliser une pièce par fabrication additive, il est nécessaire de définir des paramètres opératoires, tels que la puissance du faisceau laser, la vitesse de balayage du faisceau, etc., qui sont propres au matériau utilisé. Dans le cas de pièces pour l'industrie aéronautique, le matériau est en général un alliage métallique et le procédé de fabrication additive est du type SLM (acronyme de l'anglais *Selective Laser Melting*).

Les paramètres opératoires sont définis en deux étapes. Une première étape consiste à rechercher des paramètres permettant d'obtenir une matière saine, avec par exemple une densité de matière proche de 100%, une absence de manques de fusion, une absence de fissures, etc. La seconde étape consiste à vérifier que la pièce est réalisable par fabrication additive avec les paramètres choisis à l'étape précédente et que les états de surface obtenus sont satisfaisants, en particulier dans des zones à risques, telles qu'au niveau de faces orientées vers le bas (appelées *downskin*), de faces orientées vers le haut (appelées *upskin*), de parois minces, etc.

Lorsque les résultats de la seconde étape ne sont pas satisfaisants, il convient de répéter la première étape en modifiant les paramètres opératoires. C'est par exemple le cas lorsque les paramètres permettant d'obtenir la meilleure santé matière ne sont pas adaptés à la fabrication des faces *downskin* et *upskin.* Dans ce cas, une nouvelle itération complète est nécessaire et cette itération est longue et coûteuse.

Le nombre important de paramètres à étudier implique généralement d'évaluer la santé matière d'un grand nombre d'échantillons lors de la première étape. Cette évaluation est faite par analyse d'images sur coupe micrographique, ce qui rend cette étape fastidieuse. Dans la technique actuelle, on étudie l'influence des paramètres opératoires sur la santé matière au travers de la fabrication d'éprouvettes sous forme de cubes (typiquement 10x10x10mm³). Lors de la deuxième étape, des éprouvettes de formes plus complexes sont utilisées pour évaluer si différentes formes (parois minces, *downskin, upskin,* etc.) sont fabricables avec les paramètres définis au préalable.

L'inconvénient de cette technique réside dans le temps nécessaire à la fabrication et à l'analyse métallographique de chaque géométrie et pour chaque paramètre. La pluralité des essais engendre beaucoup de temps passé entre les itérations successives.

En effet, le procédé de fabrication par fusion laser sur lits de poudre présente l'avantage d'être très réactif. Cependant, dans un contexte industriel de fabrication de pièces, le temps passé sur le développement de paramètres de construction en fusion laser limite la réactivité de ce procédé de fabrication.

L'invention propose une solution simple, efficace et économique à ce problème.

### EXPOSE DE L'INVENTION

L'invention propose à cet effet une éprouvette pour la validation de paramètres opératoires d'un procédé de fabrication additive d'une pièce par fusion laser sur lits de poudre, ladite éprouvette étant formée d'une seule pièce par fabrication additive par fusion laser sur lits de poudre identique à celle utilisée pour la pièce à fabriquer, ladite éprouvette comportant au moins une face supérieure, au moins une face inférieure et des faces latérales dont des faces avant et arrière sensiblement opposées, ladite éprouvette comportant en outre au moins un évidement débouchant sur lesdites faces latérales avant et arrière, ledit évidement ayant en section transversale une forme sensiblement triangulaire et étant délimité par trois faces internes dont une première face interne inférieure orientée vers le haut, une deuxième face interne supérieure orientée vers le bas, et une troisième face interne supérieure qui définit une paroi mince avec une autre desdites faces latérales, qui est inclinée.

L'étape d'identification de paramètres de fabrication permettant d'obtenir une santé matière dense et conforme est indispensable. Il est donc avantageux de développer des solutions permettant de réduire le processus industriel de recherche de ces paramètres. Pour cela, on propose, une nouvelle géométrie d'éprouvette qui rend possible dans un même temps l'observation de la santé matière, ainsi que des états de surface et de la fabricabilité de certaines formes particulières. L'éprouvette, qui peut être de taille réduite, permet de multiplier sur un même plateau de fabrication le nombre de jeux de paramètres opératoires évalués et donc d'avoir très vite un aperçu de la qualité des paramètres testés en termes de santé matière, fabricabilité, rendement massique, etc.

L'éprouvette selon l'invention peut comprendre une ou plusieurs des caractéristiques suivantes, prises isolément les unes des autres ou en combinaison les unes avec les autres :
- l'éprouvette comprend deux parties distinctes, respectivement une partie massive et une partie fine ou amincie comportant ledit évidement,
- lesdites faces inférieure et supérieure sont au moins en partie sensiblement parallèles ;
- lesdites faces latérales avant et arrière sont au moins en partie sensiblement parallèles ;
- lesdites faces latérales avant et arrière sont reliées par des faces latérales au moins en partie sensiblement parallèles ;
- ladite deuxième face est inclinée d'un angle de l'ordre de 45° par rapport à ladite face inférieure et/ou d'un angle de l'ordre de 25° par rapport à ladite troisième face ;
- ladite première face est inclinée d'un angle de l'ordre de 65° par rapport à ladite deuxième face et/ou d'un angle de l'ordre de 90° par rapport à ladite troisième face ;
- ladite face latérale inclinée forme un angle de l'ordre de 70° avec ladite face inférieure ;
- ladite face latérale inclinée est orientée vers le bas ;
- ladite face arrière comprend une partie supérieure sensiblement perpendiculaire à la face supérieure et une partie inférieure inclinée d'un angle de l'ordre de 60° par rapport à la face inférieure ;
- ledit évidement débouche respectivement sur lesdites parties supérieure et inférieure de ladite face arrière.

Dans le sens de l'invention, les termes « sensiblement opposées », respectivement « sensiblement parallèles » ou « sensiblement perpendiculaire » signifient que les parois sont opposées, respectivement parallèles ou perpendiculaires, dans la limite de la faisabilité technique de l'éprouvette, c'est-à-dire dans la limite d'un écart angulaire de +/- 2° dû à la manufacture de l'éprouvette.

Les termes « sensiblement triangulaire», signifient que l'évidement est triangulaire dans la limite de la faisabilité technique de l'éprouvette, c'est-à-dire en ometant les angles de dépouilles dûs à la manufacture de l'éprouvette.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue très schématique d'une machine de fabrication additive,
- la figure 2 est une vue très schématique d'une éprouvette selon l'invention et montre des étapes de fabrication et d'utilisation de cette éprouvette,
- les figures 3a à 3d sont d'autres vues schématiques de l'éprouvette de la figure 2, et
- les figures 4a et 4b sont des images obtenues au microscope de parties d'éprouvettes selon l'invention, réalisées avec des paramètres opératoires différents.

### DESCRIPTION DETAILLEE

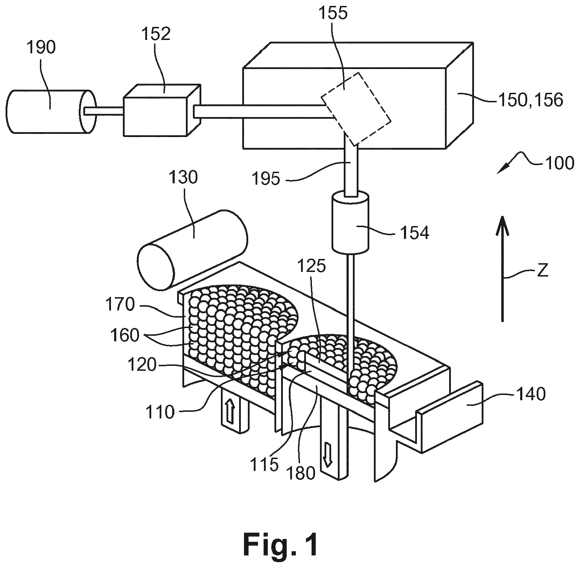

La figure 1 montre une machine de fabrication d'une pièce par fabrication additive et en particulier par fusion sélective de couches de poudre par faisceau de haute énergie.

La machine comprend un bac d'alimentation 170 contenant de la poudre métallique, un rouleau 130 pour transvaser cette poudre depuis ce bac 170 et étaler une première couche 110 de cette poudre sur un support de construction 180 (il peut s'agir d'un support massif, d'une partie d'une autre pièce ou d'une grille support utilisée pour faciliter la construction de certaines pièces).

La machine comprend également un bac de recyclage 140 pour récupérer une infime partie de la poudre usagée (en particulier non fondue ou non frittée) et la majeure partie de la poudre en excès, après étalement de la couche de poudre sur le support de construction 180. Ainsi, la majeure partie de la poudre du bac de recyclage est composée de poudre neuve. Aussi, ce bac de recyclage 140 est communément appelé par la profession bac de trop plein ou cendrier.

Cette machine comprend également un générateur 190 de faisceau laser 195, et un système de pilotage 150 apte à diriger ce faisceau 195 sur n'importe quelle région du support de construction 180 de façon à balayer n'importe quelle région d'une couche de poudre. La mise en forme du faisceau laser et la variation de son diamètre sur le plan focal se font respectivement au moyen d'un dilatateur de faisceau 152 et d'un système de focalisation 154, l'ensemble constituant le système optique.

Cette machine peut appliquer le procédé assimilable à un procédé de fusion laser sur lit de poudre ou SLM (acronyme de l'anglais Selective Laser Melting) sur une poudre et peut utiliser n'importe quel faisceau de haute énergie en place du faisceau laser 195, tant que ce faisceau est suffisamment énergétique pour fondre les particules de poudre.

Le rouleau 130 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 150 comprend par exemple au moins un miroir 155 orientable sur lequel le faisceau laser 195 se réfléchit avant d'atteindre une couche de poudre dont chaque point de la surface se trouve située toujours à la même hauteur par rapport à la lentille de focalisation, contenue dans le système de focalisation 154, la position angulaire de ce miroir 155 étant pilotée par une tête galvanométrique pour que le faisceau laser balaye au moins une région de la première couche de poudre, et suive ainsi un profil de pièce pré-établi.

La machine fonctionne de la façon suivante. On dépose à l'aide du rouleau 130 une première couche 110 de poudre d'un matériau sur le support de construction 180, cette poudre étant transvasée depuis un bac d'alimentation 170 lors d'un mouvement aller du rouleau 130 puis elle est raclée, et éventuellement légèrement compactée, lors d'un (ou de plusieurs) mouvement(s) de retour du rouleau 130. L'excédent de poudre est récupéré dans le bac de recyclage 140. On porte une région de cette première couche 110 de poudre, par balayage avec le faisceau laser 195, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 160 de cette région de la première couche 110 sont fondues et forment un premier cordon 115 d'un seul tenant, solidaire avec le support de construction 180. On abaisse le support 180 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du support 180 est une valeur invariable au jeu près. On dépose ensuite une deuxième couche 120 de poudre sur la première couche 110 et sur ce premier cordon 115, puis on chauffe par exposition au faisceau laser 195 une région de la deuxième couche 20 qui est située partiellement ou complètement au-dessus de ce premier cordon 115, de telle sorte que les particules de poudre de cette région de la deuxième couche 120 sont fondues, avec au moins une partie du premier élément 15, et forment un deuxième cordon d'un seul tenant ou consolidé 125, l'ensemble de ces deux cordons 115 et 125 formant un bloc d'un seul tenant. A cet effet, le deuxième cordon 125 est avantageusement déjà entièrement lié dès qu'une partie de ce deuxième cordon 125 se lie au premier élément 115. On poursuit ensuite ce processus de construction de la pièce couche par couche en ajoutant des couches supplémentaires de poudre sur l'ensemble déjà formé. Le balayage avec le faisceau 195 permet de construire chaque couche en lui donnant une forme en accord avec la géométrie de la pièce à réaliser. Les couches inférieures de la pièce se refroidissent plus ou moins vite au fur et à mesure que les couches supérieures de la pièce se construisent.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi selon l'état de l'art actuel, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser sur lit de poudre utilise en outre de préférence des poudres de morphologie sphérique, propres (c'est-à-dire non contaminées par des éléments résiduels provenant de la synthèse), très fines (la dimension de chaque particule est comprise entre 1 et 100 µm et de préférence entre 45 et 90 µm), ce qui permet d'obtenir un excellent état de surface de la pièce finie. La poudre est de préférence en alliage métallique, par exemple à base nickel.

La fusion sélective ou le frittage sélectif par laser permet par ailleurs une diminution des délais de fabrication, des coûts et des frais fixes, par rapport à une pièce moulée, injectée ou usinée dans la masse.

Selon l'invention, une pièce, par exemple aéronautique, est réalisée par fabrication additive par la technique précitée. Pour valider les paramètres opérationnels de fabrication de cette pièce, une éprouvette est préalablement également réalisée par fabrication additive avec la même poudre.

En fabricant les éprouvettes de contrôle de la santé matière selon le modèle proposé ci-dessous, il est possible en une seule observation microscopique, d'établir si les paramètres de fusion laser sont propices à la fabrication de la pièce et ce quelle que soit sa géométrie.

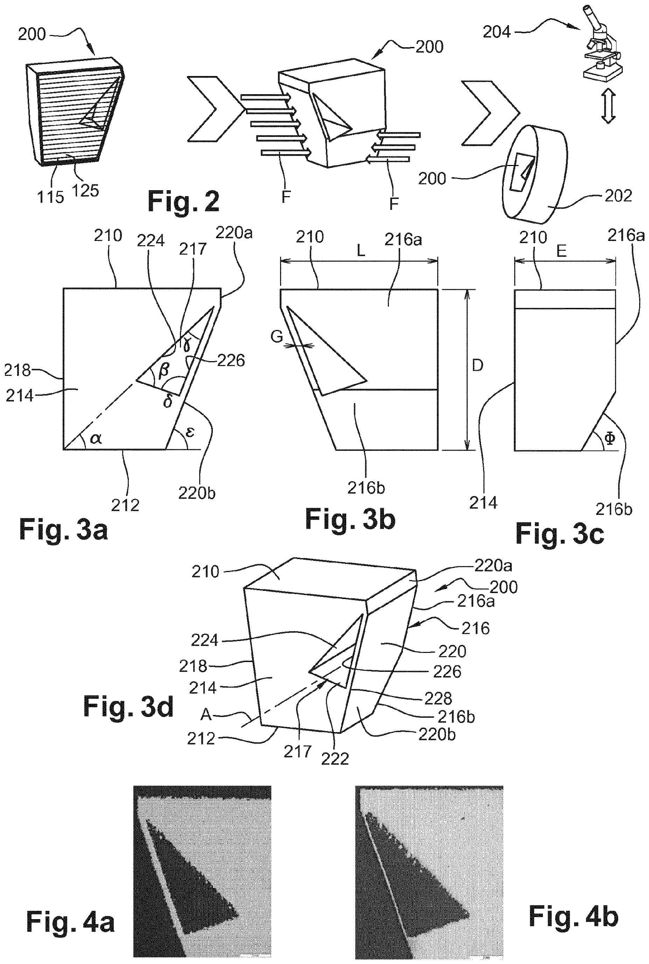

La figure 2 montre des étapes de fabrication additive de l'éprouvette 200, couche par couche ou cordon par cordon 115, 125 (à gauche sur le dessin). Après fabrication, l'éprouvette 200 fait l'objet de mesures de son état de surface par palpage, ce palpage étant schématiquement représenté par les flèches F. Enfin, l'éprouvette 200 est enrobée de manière unitaire dans un bloc 202, ici cylindrique, par exemple en résine transparente, en vue de son observation par microscope 204. Il est ainsi possible de visualiser des parties fines et massives de l'éprouvette 200.

Les figures 3a à 3d montrent dans le détail les formes et dimensions de l'éprouvette 200 selon l'invention.

L'éprouvette 200 est formée d'une seule pièce par fabrication additive par fusion laser sur lits de poudre. La poudre utilisée est identique à celle utilisée pour la pièce à fabriquer.

Dans l'exemple représenté, l'éprouvette 200 comporte au moins une face supérieure 210, au moins une face inférieure 212 et des faces latérales 214, 216, 218, 220 dont des faces avant 214 et arrière 216 sensiblement opposées.

L'éprouvette 200 comporte en outre au moins un évidement 217 débouchant sur les faces latérales avant et arrière 214, 216. L'évidement 217 présente un axe A sensiblement perpendiculaire aux plans passant par les faces 214, 216. L'évidement 217 a en section transversale (par rapport à l'axe A) une forme sensiblement triangulaire et est délimité par trois faces internes 222, 224, 226 dont une première face interne inférieure 222 est orientée vers le haut, une deuxième face interne supérieure 224 est orientée vers le bas, et une troisième face interne supérieure 226 définit une paroi mince 228 avec une autre 220 des faces latérales. La face 220 est ici inclinée.

Les faces inférieure 212 et supérieure 210 sont ici sensiblement parallèles. Les faces latérales avant 214 et arrière 216 sont au moins en partie sensiblement parallèles. La face avant 214 est ici plane alors que la face arrière 216 comprend deux parties planes et inclinées l'une par rapport à l'autre. Elle comprend une partie supérieure 216a sensiblement perpendiculaire à la face supérieure 210 et une partie inférieure 216b inclinée d'un angle φ par rapport à la face inférieure 212.

Les faces latérales avant 214 et arrière 216 sont reliées par les faces latérales 218, 220 qui sont au moins en partie sensiblement parallèles. L'une 218 de ces faces latérales est plane. L'autre 220 des faces latérales comprend deux parties planes et inclinées l'une par rapport à l'autre. Elle comprend une partie supérieure 220a sensiblement perpendiculaire à la face supérieure 210 et une partie inférieure 220b inclinée d'un angle ε par rapport à la face inférieure 212. L'évidement 217 débouche respectivement sur les parties supérieure 216a et inférieure 216b de cette face arrière.

Dans l'exemple représenté :
- la deuxième face 224 est inclinée d'un angle α de l'ordre de 45° par rapport à la face inférieure 212 et d'un angle γ de l'ordre de 25° par rapport à la troisième face 226,
- la première face 222 est inclinée d'un angle β de l'ordre de 65° par rapport à la deuxième face 224 et d'un angle δ de l'ordre de 90° par rapport à la troisième face 226,
- la face latérale inclinée 220, 220b forme un angle ε de l'ordre de 70° avec la face inférieure 212, et
- la partie inférieure 216b forme un angle φ de l'ordre de 60° avec la face inférieure 212.

Par ailleurs, les dimensions de l'éprouvette 200 proposée ici ont été retenues car elles permettent dans un volume réduit (de l'ordre de 10x10x10mm³) d'évaluer la santé matière, la fabricabilité, et le rendement massique. La dimension L entre la face 218 et la partie 220a est de l'ordre de 12mm, la dimension D entre les faces 210, 212 est de l'ordre de 12mm et la dimension E entre la face 214 et la partie 216a est de l'ordre de 8mm. La paroi mince 228 peut avoir une épaisseur comprise entre 0,45mm et 0,7mm (dimension G entre la face 226 et la partie 220b). La paroi mince 228 a de préférence une épaisseur de l'ordre de 0,5mm.

L'éprouvette 200 selon l'invention présente ainsi :
- une partie massive formée par la large partie de son volume,
- une partie fine à savoir la paroi mince 228 construite en dévers,
- des faces en *upskin* à savoir les faces 222 et 226,
- et des faces en *downskin* à savoir les faces 224 et 220

De plus, une face *upskin* 226 et une face *downskin* 220 sont situées de part et d'autre la paroi mince 228. Ces principales formes permettent d'évaluer, avec les ensembles de paramètres testés, le spectre global de la faisabilité de fabrication de toutes sortes de formes et limitent donc par conséquent les risques de mauvaise surprise lors de la fabrication effective de la pièce.

L'éprouvette 200 présente une large partie de son volume ne comportant aucune difficulté particulière. Ce volume permet de contrôler la santé matière représentative d'une partie massive d'une pièce.

Parmi les zones singulières les plus critiques de la fabrication par fusion laser sur lits de poudre, on peut citer :
- les zones construites en dévers dont les couches successives ont une portion de poudre fusionnée reposant sur de la poudre non fusionnée issue de la couche précédente. L'angle ε de 45° pour la paroi mince 228 a été retenu car il est généralement associé à une limite naturelle de construction sans ajout de support,
- la paroi mince 228 construite en dévers sert à démontrer que le choix d'un jeu de paramètres de construction permet une bonne fabricabilité d'une zone compilant deux cas critiques : une partie fine et une zone construite en appui sur de la poudre non fusionnée. L'épaisseur G de 0,5mm est intéressante car ce type d'épaisseur s'approche des limites du procédé de fabrication additive.

Plusieurs angles en dévers, se fabricant sur de la poudre non fusionnée sont présents sur cette géométrie, parmi eux deux sont accessibles à des mesures de rugosité par des procédés de palpage, par exemple.

L'analyse métallographique réalisée sur l'éprouvette consiste en la mesure de la densité de matière apparente sur la surface observée. Dans un second temps la rugosité des faces *downskin* et *upskin* font aussi l'objet d'une évaluation. Enfin, et comme représenté sur les figures 4a et 4b, il est possible de quantifier la réponse du jeu de paramètres lors de la fabrication des parties fines.

L'invention permet ainsi d'accélérer et d'alléger un processus à l'origine intrinsèquement fastidieux, et qui pourtant reste absolument incontournable au développement de paramètres de construction par procédé de fusion laser sur lits de poudre.

De plus, il permet une limitation des quantités de matière perdue, dans le sens où cette matière n'est utilisée que pour la validation de paramètres de fabrication et qu'elle n'est pas réutilisable pour la fabrication de pièces à valeur ajoutée. La réduction du nombre d'étapes permet cette économie. Ce gain permet de diminuer de 2 à 5 étapes le processus de réglage industriel du jeu des paramètres de fabrication.

Enfin, la conception de l'éprouvette 200 a été réalisée dans l'objectif de permettre directement une analyse métallographique par enrobage. L'éprouvette 200 n'a pas besoin d'être « redécoupée » ou « réduite en taille », elle est directement « enrobable » et analysable sous microscope (figure 2).

## Revendications

1. Eprouvette (200) pour la validation de paramètres opératoires d'un procédé de fabrication additive d'une pièce par fusion laser sur lits de poudre, ladite éprouvette étant formée d'une seule pièce par fabrication additive par fusion laser sur lits de poudre identique à celle utilisée pour la pièce à fabriquer, ladite éprouvette comportant au moins une face supérieure (210), au moins une face inférieure (212) et des faces latérales (214, 216, 218, 220) dont des faces avant (214) et arrière (216) sensiblement opposées, ladite éprouvette comportant en outre au moins un évidement (217) débouchant sur lesdites faces latérales avant et arrière, ledit évidement ayant en section transversale une forme sensiblement triangulaire et étant délimité par trois faces internes dont une première face interne inférieure (222) orientée vers le haut, une deuxième face interne supérieure (224) orientée vers le bas, et une troisième face interne supérieure (226) qui définit une paroi mince (228) avec une autre (220, 220b) desdites faces latérales, qui est inclinée.

2. Eprouvette (200) selon la revendication 1, dans laquelle lesdites faces inférieure (212) et supérieure (210) sont au moins en partie sensiblement parallèles.

3. Eprouvette (200) selon la revendication 1 ou 2, dans laquelle lesdites faces latérales avant (214) et arrière (216) sont au moins en partie sensiblement parallèles.

4. Eprouvette (200) selon l'une des revendications précédentes, dans laquelle lesdites faces latérales avant (214) et arrière (216) sont reliées par des faces latérales (218, 220) au moins en partie sensiblement parallèles.

5. Eprouvette (200) selon l'une des revendications précédentes, dans laquelle ladite deuxième face (224) est inclinée d'un angle (α) de l'ordre de 45° par rapport à ladite face inférieure (212) et/ou d'un angle (γ) de l'ordre de 25° par rapport à ladite troisième face (226).

6. Eprouvette (200) selon l'une des revendications précédentes, dans laquelle ladite première face (222) est inclinée d'un angle (β) de l'ordre de 65° par rapport à ladite deuxième face (224) et/ou d'un angle (δ) de l'ordre de 90° par rapport à ladite troisième face (226).

7. Eprouvette (200) selon l'une des revendications précédentes, dans laquelle ladite face latérale inclinée (220, 220b) forme un angle (ε) de l'ordre de 70° avec ladite face inférieure (212).

8. Eprouvette (200) selon l'une des revendications précédentes, dans laquelle ladite face latérale inclinée (220, 220b) est orientée vers le bas.

9. Eprouvette (200) selon l'une des revendications précédentes, dans laquelle ladite face arrière (216) comprend une partie supérieure (216a) sensiblement perpendiculaire à la face supérieure (210) et une partie inférieure (216b) inclinée d'un angle (φ) de l'ordre de 60° par rapport à la face inférieure (212).

10. Eprouvette (200) selon l'une des revendications précédentes, dans laquelle ledit évidement (217) débouche respectivement sur lesdites parties supérieure (216a) et inférieure (216b) de ladite face arrière (216).

## Patentansprüche

1. Prüfkörper (200) zur Validierung der Betriebsparameter eines Verfahrens zur additiven Fertigung eines Teils durch Laserschmelzen auf Pulverschichten, wobei der Prüfkörper in einem einzigen Stück durch additive Fertigung durch Laserschmelzen auf Schichten aus Pulver gebildet wird, das mit dem für das zu fertigende Teil verwendete identisch ist, wobei der Prüfkörper mindestens eine obere Fläche (210), mindestens eine untere Fläche (212) und Seitenflächen (214, 216, 218, 220) umfasst, wobei die vordere (214) und hintere Fläche (216) im Wesentlichen gegenüberliegend sind, wobei der Prüfkörper weiter mindestens eine Aussparung (217) umfasst, die in die vordere und hintere Seitenfläche mündet, wobei die Aussparung im Querschnitt eine im Wesentlichen dreieckige Form aufweist und durch drei Innenflächen begrenzt ist, wobei eine erste untere Innenfläche (222) nach oben weist, eine zweite obere Innenfläche (224) nach unten weist und eine dritte obere Innenfläche (226) mit einer anderen (220, 220b) der Seitenflächen, welche geneigt ist, eine dünne Wand (228) definiert.

2. Prüfkörper (200) nach Anspruch 1, wobei die untere (212) und obere (210) Fläche zumindest teilweise im Wesentlichen parallel sind.

3. Prüfkörper (200) nach Anspruch 1 oder 2, wobei die vordere (214) und hintere (216) Seitenfläche zumindest teilweise im Wesentlichen parallel sind.

4. Prüfkörper (200) nach einem der vorstehenden Ansprüche, wobei die vordere (214) und hintere (216) Seitenfläche durch zumindest teilweise im Wesentlichen parallele Seitenflächen (218, 220) verbunden sind.

5. Prüfkörper (200) nach einem der vorstehenden Ansprüche, wobei die zweite Fläche (224) in einem Winkel (α) von etwa 45° in Bezug auf die untere Fläche (212) und/oder in einem Winkel (γ) von etwa 25° in Bezug auf die dritte Fläche (226) geneigt ist.

6. Prüfkörper (200) nach einem der vorstehenden Ansprüche, wobei die erste Fläche (222) in einem Winkel (β) von etwa 65° in Bezug auf die zweite Fläche (224) und/oder in einem Winkel (δ) von etwa 90° in Bezug auf die dritte Fläche (226) geneigt ist.

7. Prüfkörper (200) nach einem der vorstehenden Ansprüche, wobei die geneigte Seitenfläche (220, 220b) mit der unteren Fläche (212) einen Winkel (ε) von etwa 70° bildet.

8. Prüfkörper (200) nach einem der vorstehenden Ansprüche, wobei die geneigte Seitenfläche (220, 220b) nach unten gerichtet ist.

9. Prüfkörper (200) nach einem der vorstehenden Ansprüche, wobei die hintere Fläche (216) einen oberen Abschnitt (216a) umfasst, der im Wesentlichen senkrecht zu der oberen Fläche (210) ist, und einen unteren Abschnitt (216b) umfasst, der in einem Winkel (φ) von etwa 60° in Bezug auf die untere Fläche (212) geneigt ist.

10. Prüfkörper (200) nach einem der vorstehenden Ansprüche, wobei die Aussparung (217) jeweils in den oberen (216a) und unteren (216b) Abschnitt der hinteren Fläche (216) mündet.

## Claims

1. A test specimen (200) for validating operating parameters of a method for the additive manufacturing of a part by laser melting on powder beds, said test specimen being formed in one piece by additive manufacturing by laser melting on powder beds identical to that used for the part to be manufactured, said test specimen comprising at least one upper face (210), at least one lower face (212) and side faces (214, 216, 218, 220) including front faces (214) and rear faces (216) substantially on opposite sides from one another, said test specimen further comprising at least one recess (217) opening onto said front and rear side faces, said recess having a substantially triangular shape in cross-section and being delimited by three inner faces, including a first lower inner face (222) oriented upwards, a second upper inner face (224) oriented downwards, and a third upper inner face (226) which defines a thin wall (228) with one other (220, 220b) of said side faces, which is inclined.

2. The test specimen (200) according to claim 1, wherein said lower (212) and upper (210) faces are at least partially substantially parallel.

3. The test specimen (200) according to claim 1 or 2, wherein said front (214) and rear (216) side faces are at least partially substantially parallel.

4. The test specimen (200) according to one of the preceding claims, wherein said front (214) and rear (216) side faces are connected by side faces (218, 220) at least partially substantially parallel.

5. The test specimen (200) according to one of the preceding claims, wherein said second face (224) is inclined by an angle (α) of about 45° with respect to said lower face (212) and/or an angle (Y) of about 25° with respect to said third face (226).

6. The test specimen (200) according to one of the preceding claims, wherein said first face (222) is inclined by an angle (β) of about 65° with respect to said second face (224) and/or an angle (δ) of about 90° with respect to said third face (226).

7. The test specimen (200) according to one of the preceding claims, wherein said inclined side face (220, 220b) forms an angle (ε) of about 70° with said lower face (212).

8. The test specimen (200) according to one of the preceding claims, wherein said inclined side face (220, 220b) is oriented downward.

9. The test specimen (200) according to one of the preceding claims, wherein said rear face (216) comprises an upper portion (216a) substantially perpendicular to the upper face (210) and a lower portion (216b) inclined by an angle (φ) of about 60° with respect to the lower face (212).

10. The test specimen (200) according to one of the preceding claims, wherein said recess (217) opening onto said upper (216a) and lower (216b) portions of said rear face (216) respectively.
